Europäisches Patentamt

European Patent Office

Office européen des brevets

(19)

(11) **EP 0 654 540 B1**

(12) **EUROPÄISCHE PATENTSCHRIFT**

(45) Veröffentlichungstag und Bekanntmachung des Hinweises auf die Patenterteilung:
**04.03.1998  Patentblatt 1998/10**

(51) Int Cl.$^6$: **C22B 34/12**, C01G 23/053

(21) Anmeldenummer: **94117839.4**

(22) Anmeldetag: **11.11.1994**

(54) **Herstellung einer Ti(III)haltigen Lösung und deren Verwendung**

Preparation of a Ti(III)-containing solution and its use

Préparation d'une solution contenant du Ti(III) et son utilisation

(84) Benannte Vertragsstaaten:
**BE DE ES FR GB**

(30) Priorität: **24.11.1993  DE 4339975**

(43) Veröffentlichungstag der Anmeldung:
**24.05.1995  Patentblatt 1995/21**

(73) Patentinhaber: **BAYER AG**
**51368 Leverkusen (DE)**

(72) Erfinder:
- **Müller, Armin, Dr.**
**D-47829 Krefeld (DE)**
- **Thometzek, Peter, Dr.**
**D-47800 Krefeld (DE)**

(56) Entgegenhaltungen:
**EP-A- 0 654 539          US-A- 2 416 216**

- **DATABASE WPI Derwent Publications Ltd., London, GB; AN 85-288362 & SU-A-1 154 207 (KONOTOPCHIK)**
- **DATABASE WPI Derwent Publications Ltd., London, GB; AN 74-12790V & SU-A-373 257 (BEKKERMAN L)**
- **CHEMICAL ABSTRACTS, vol. 97, no. 12, 20. September 1982, Columbus, Ohio, US; abstract no. 94762c, STARKOV Seite 148 ; & DEPOSITED DOC VINITI 1688-81, 1981**

**Beschreibung**

Die vorliegende Erfindung betrifft ein Verfahren zur Herstellung von $Ti^{3+}$-haltigen Lösungen, bei dem titanhaltige Rohstoffe mit Schwefelsäure unter Zugabe von metallischem Eisen aufgeschlossen werden, und deren Verwendung bei der Herstellung von Titandioxid.

Titandioxid wird fast ausschließlich nach zwei Verfahren, dem Sulfatverfahren und dem Chloridverfahren, hergestellt (Ullmanns Encyklopädie der technischen Chemie, 4. Auflage, Band 18, Seite 569 ff.).

Beim Sulfatverfahren wird ein Titanerz und/oder Titanschlacke mit Schwefelsäure aufgeschlossen. Dieser Aufschluß kann sowohl kontinuierlich als auch diskontinuierlich durchgeführt werden. Der hierbei entstehende feste Aufschlußkuchen wird anschließend mehrere Stunden bei Temperaturen zwischen 100°C und 200°C gereift und anschließend mit Wasser oder verdünnter Schwefelsäure gelöst. Die erhaltene Aufschlußlösung kann je nach eingesetztem Rohstoff verschiedene Salze in gelöster Form enthalten. Beim Einsatz von Ilmeniten oder anderen Titanerzen enthält die Aufschlußlösung im wesentlichen Titanylsulfat und Eisen(III)sulfat in gelöster Form. Beim Einsatz von Titanschlacken, die aus Titanerzen durch Reduktion mit Kohlenstoff hergestellt werden können, enthält die Aufschlußlösung Titanylsulfat, Titan(III)sulfat und Eisen(II)sulfat. Desweiteren enthalten beide Aufschlußlösungen verschiedene andere Metallsulfate aus den zum Aufschluß eingesetzten Rohstoffen (Erz, Säure, u.a.), wie zum Beispiel Aluminiumsulfat, Magnesiumsulfat, Chrom(III)sulfat u.a. in gelöster Form und feste, nicht aufgeschlossene Gangart.

Für den weiteren Herstellungsprozeß bis zum Titandioxid, daß heißt Fällung des Titanoxidhydrats, Kalzination desselben, Mahlung des Titandioxids und gegebenenfalls dessen weitere Oberflächenmodifizierung, ist es wesentlich, daß das in der Aufschlußlösung enthaltene $Fe^{3+}$ in $Fe^{2+}$ überführt wird, da $Fe^{3+}$ in der Hydrolyse mitgefällt würde, was zu einer unerwünschten Verunreinigung des Titandioxids und hierdurch bedingt zu einer nicht akzeptablen Verschlechterung der optischen Eigenschaften des Pigmentes führen würde. Bezüglich der aus Titanschlacken erhaltenen Aufschlußlösung sind hierfür in der Regel keine weiteren Maßnahmen erforderlich. Hinsichtlich der Aufschlußlösung aus Titanerzen, z.B. aus Ilmeniten muß jedoch eine Reduktion des $Fe^{3+}$ zu $Fe^{2+}$ erfolgen. Diese Reduktion wird im allgemeinen mit metallischem Eisen beim Lösen des Aufschlußkuchens im Aufschlußbehälter bzw. nach dem Lösen durch Reduktion der Aufschlußlösung in Reduktionsstürmen mit metallischem Eisen durchgeführt. Hierbei ist jedoch nachteilig, daß sich im Rahmen einer Nebenreaktion Wasserstoffgas nach der Reaktionsgleichung

$$Fe + 2H^+ \rightarrow Fe^{2+} + H_2$$

sowohl im Aufschlußgefäß als auch im Reduktionssturm bildet. Dies erfordert eine genaue Kontrolle der Abgase und führt zu Verlusten an metallischem Eisen. Bei der Reduktion in Reduktionsstürmen, ist weiterhin nachteilig, daß eine genaue Temperaturkontrolle und eine Kühlung des Reduktionsturms erforderlich ist, um eine vorzeitige Hydrolyse des Titanylsulfats zum Titanoxidhydrat zu vermeiden.

Zur Beseitigung der Probleme der Reduktion im Reduktionsturm sind verschiedene Verfahren bekannt.

So wird in DE-A-541486 vorgeschlagen, sulfidische Erze, sulfidische Eisenverbindungen bzw. eine seperat mit metallischem Eisen hergestellte $Ti^{3+}$-Lösung zum Aufschluß zuzusetzen. Ein anderes Verfahren (DE-A-2 2 951 799) beschreibt die Zumischung von Titanschlakke zu Ilmeniten in bestimmten Verhältnissen von $Ti^{3+}$ : $Fe^{3+}$ und den gemeinsamen Aufschluß mit Schwefelsäure.

In weiteren Verfahren (US-A-4 288 417, US-A-4 288 415) wird das Titanerz mit Schwefelsäure einer Konzentration von 25-60 % und bei Temperaturen bis 140°C gemeinsam mit metallischem Eisen gelaugt und hierbei eine Lösung mit geringem Gehalt an $Ti^{3+}$ erhalten. Der Hauptanteil an Titan liegt als $Ti^{4+}$ vor.

Neben diesen Verfahren sind weitere Verfahren bekannt, in denen die Nachteile der Reduktion der Aufschlußlösung mit metallischem Eisen mindestens teilweise behoben werden, indem die Reduktion mit $Ti^{3+}$-haltigen Lösungen durchgeführt wird. Diese Lösungen können auf verschiedenen Wegen hergestellt werden.

In DE-A-2 015 155 bzw. US-A-3 416 885 wird vorgeschlagen zur Reduktion von $Fe^{3+}$-haltigen Aufschlußlösungen metallisches Eisen indirekt einzusetzen. Das Eisen wird durch Reduktion von Titaneisenerz zu Titanschlacke hergestellt. Dieses Eisen wird dann mit einer $Ti^{4+}$-Lösung zu einer $Ti^{3+}$-Lösung umgesetzt, die wiederum zur Reduktion der Aufschlußlösung eingesetzt wird.

In US-A-2 049 504 wird ein Prozeß zur Reduktion von $Ti^{4+}$-haltigen und $Fe^{3+}$-haltigen Lösungen beschrieben, bei welchem die Reduktion mit einer $Ti^{3+}$-haltigen Lösung erfolgt, die durch Reduktion einer $Ti^{4+}$-haltigen Lösung mit Ca, $H_2$, Mg, Al, Zn, Fe oder Sn hergestellt wurde.

In FR-A-2 363 642 wird als Ersatz zur Reduktion von $Ti^{4+}$- und $Fe^{3+}$-haltigen Lösung aus Ilmenitaufschlüssen mittels metallischem Eisen ein elektrochemischer Reaktor mit Kathode, Anode, Diaphragma und kontinuierlicher Spannungsquelle verwendet.

In SU-A-1 154 207 (Database WPI, Derwent Publications Ltd., London, GB; AN 85-288 362) wird ein Aufschluß von Titankonzentraten mit Schwefelsäure in Gegenwart eines Reduktionsmittels (Gußeisenspäne) bei erhöhter Temperatur und anschließender Auslaugung der Reaktionsmischung beschrieben. Es wird beispielsweise eine Lösung erhalten, die 138 g/l $TiO_2$ und 5 g/l $Ti_2O_3$ enthält.

Aufgabe der vorliegenden Erfindung war es, ein preiswertes, einfach herzustellendes Reduktionsmittel zur Verfügung zu stellen, das zur Reduktion von störendem $Fe^{3+}$ im Herstellungsprozeß von Titandioxid eingesetzt werden kann, ohne daß dadurch o.g. Probleme auftreten.

Diese Aufgabe konnte durch das erfindungsgemäß hergestellte Reduktionsmittel und dessen Verwendung gelöst werden.

Gegenstand der Erfindung ist ein Verfahren zur Herstellung einer $Ti^{3+}$-haltigen Lösung, welches dadurch gekennzeichnet ist, daß nicht aufgeschlossener Rückstand aus dem Aufschluß titanhaltiger Rohstoffe mit Schwefelsäure nach dem Sulfatverfahren oder Gemische davon mit anderen titanhaltigen Rohstoffen mit Schwefelsäuren nach dem Sulfatverfahren bei Schwefelsäureanfangskonzentrationen von > 80 Gew.-% $H_2SO_4$ und Temperaturen von > 150°C aufgeschlossen wird und der dabei anfallende Aufschlußkuchen mit Wasser und/oder Schwefelsäure gelöst wird, wobei vor oder während des Aufschlusses soviel metallisches Eisen zugegeben wird, daß nach dem Lösen des Aufschlußkuchens mindestens 5 Gew.-% bis 100 Gew.-% $Ti^{3+}$ in der Aufschlußlösung, bezogen auf den Gesamtgehalt an Titan in der Aufschlußlösung, vorliegen.

Der Rückstand aus dem Aufschluß wurde bisher größtenteils noch verworfen, obwohl er erhebliche Mengen am Wertstoff Titan enthält.

Als metallisches Eisen wird bevorzugt Eisenschrott, Stahlschrott, Gußschrott und/oder ein anderer metallisches Eisen enthaltender Materialschrott mit einem Gehalt von > 1 Gew.-% Eisen, bezogen auf Gesamtgewicht, eingesetzt.

Die molare Menge des zugesetzten metallischen Eisens beträgt bevorzugt das 0,25- bis 5-fache der im Aufschluß durch die Rohstoffe (titanhaltige Rohstoffe, Dünnsäuren) eingetragenen molaren Mengen an Titan und Eisen, ausgenommen die Menge an zugesetztem metallischen Eisen.

Die nach dem erfindungsgemäßen Verfahren hergestellte $Ti^{3+}$-haltige Lösung wird bevorzugt bei der Herstellung von Titandioxid nach dem Sulfatverfahren zur Reduktion von $Fe^{3+}$ in der Aufschlußlösung verwendet.

Ein weiterer Gegenstand der Erfindung ist ein Verfahren zur Herstellung von Titandioxid nach dem Sulfatverfahren durch Aufschluß von titanhaltigen Rohstoffen mit Schwefelsäure unter Bildung eines Aufschlußkuchens, Auflösen des Aufschlußkuchens mit Wasser und/oder Schwefelsäure unter Bildung der sogenannten Aufschlußlösung (Schwarzlösung), Abtrennen unlöslicher Bestandteile von der Aufschlußlösung, Reduktion von $Fe^{3+}$ in der Aufschlußlösung, Hydrolyse unter Bildung von Titanoxidhydrat, Abtrennen des Titanoxidhydrates von der Hydrolysenmutterlauge (Dünnsäure), Kalzinieren des Titanoxidhydrates unter Bildung von Titandioxid, welches dadurch gekennzeichnet ist, daß die Reduktion mit einer erfindungsgemäß hergestellten $Ti^{3+}$-haltigen Lösung durchgeführt wird.

Der Aufschluß kann sowohl kontinuierlich als auch diskontinuierlich, mit oder ohne Energiezufuhr von außen durchgeführt werden. Die Energie kann dabei durch Zusätze, die Energie in den Aufschluß eintragen, zugeführt werden.

Vorteilhaft bei der erfindungsgemäß hergestellten $Ti^{3+}$-haltigen Lösung und deren Einsatz ist, daß der Wertstoff Titan aus dem Rückstand gewonnen wird und durch den Einsatz in der Aufschlußlösung zusätzlich zu Titandioxid verarbeitet wird, so daß die Ausbeute steigt. Damit können gleichzeitig die Deponiemengen an Aufschlußrückstand verringert werden. Die Probleme bei der Reduktion von Aufschlußlösungen mit Eisen entfallen. Zudem kann die $Ti^{3+}$-haltige Lösung durch Einsatz von minderwertigem Guß- oder Stahlschrott mit kleinen Teilchengrößen sehr preisgünstig hergestellt werden.

Die Erfindung soll anhand des nachfolgenden Beispiels näher erläutert werden.

## Beispiel

In einem Gefäß werden 100 g Aufschlußrückstand aus der Titandioxidproduktion (Zusammensetzung: 36,3 Gew.-% $TiO_2$, 3,5 Gew.-% Eisen, 16,6 Gew.-% $H_2SO_4$, etwa 23 Gew.-% Wasser, etwa 20 Gew.-% übrige feste Bestandteile) mit 26 g metallischem Eisen und 131 g 96 %iger Schwefelsäure unter Rückfluß aufgeschlossen und nach dem Festwerden der Mischung bei 180-190°C gehalten. Die Gesamtreaktionzeit beträgt 2 h. Anschließend wird der Aufschlußkuchen mit 200 ml Wasser 12 h bei Raumtemperatur gelöst und die Suspension filtriert. Die abfiltrierte Lösung enthält 21,6 g $TiO_2$ in gelöster Form. Hiervon liegen 15,3 g $TiO_2$ als $Ti^{3+}$ vor. Der Rückstand enthält noch etwa 14 g $TiO_2$.

Die so hergestellte $Ti^{3+}$-Lösung wird zur Reduktion einer $Fe^{3+}$-haltigen Aufschlußlösung beim Titandioxidherstellungsprozeß eingesetzt.

## Patentansprüche

1. Verfahren zur Herstellung einer $Ti^{3+}$-haltigen Lösung, dadurch gekennzeichnet, daß ein nicht aufgeschlossener Rückstand aus dem Aufschluß titanhaltiger Rohstoffe mit Schwefelsäure nach dem Sulfatverhalten oder Gemische davon mit anderen titanhaltigen Rohstoffen mit Schwefelsäuren nach dem Sulfatverfahren bei einer Schwefelsäureanfangskonzentration von > 80 Gew.-% $H_2SO_4$ und und einer Temperatur von > 150°C aufgeschlossen wird und der dabei anfallende Aufschlußkuchen mit Wasser und/oder Schwefelsäure gelöst wird, wobei vor oder während des Aufschlusses soviel metallisches Eisen zugegeben wird, daß nach dem Lösen des Aufschlußkuchens mindestens 5 Gew.-% bis 100 Gew.-% $Ti^{3+}$ in der Aufschlußlösung, bezogen auf den Gesamtgehalt an Titan in der Aufschlußlösung, vorliegen.

**2.** Verfahren gemäß Anspruch 1, dadurch gekennzeichnet, daß als metallisches Eisen Eisenschrott, Stahlschrott, Gußschrott und/oder ein anderer metallisches Eisen enthaltender Materialschrott mit einem Gehalt von > 1 Gew.-% Eisen, bezogen auf Gesamtgewicht, eingesetzt wird.

**3.** Verfahren gemäß Anspruch 1, dadurch gekennzeichnet, daß die molare Menge des zugesetzten metallischen Eisens das 0,25- bis 5-fache der im Aufschluß durch die Rohstoffe eingetragenen molaren Mengen an Titan und Eisen, ausgenommen die Menge an zugesetztem metallischen Eisen, beträgt.

**4.** Verwendung der nach den Ansprüchen 1 bis 3 hergestellten $Ti^{3+}$-haltigen Lösung bei der Herstellung von Titandioxid nach dem Sulfatverfahren zur Reduktion von $Fe^{3+}$ in der Aufschlußlösung.

**5.** Verfahren zur Herstellung von Titandioxid nach dem Sulfatverfahren durch Aufschluß von titanhaltigen Rohstoffen mit Schwefelsäure unter Bildung eines Aufschlußkuchens, Auflösen des Aufschlußkuchens mit Wasser und/oder Schwefelsäure unter Bildung sogenannter Aufschlußlösung (Schwarzlösung), Abtrennen unlöslicher Bestandteile (Rückstand) von der Aufschlußlösung, Reduktion von $Fe^{3+}$ in der Aufschlußlösung, Hydrolyse unter Bildung von Titanoxidhydrat, Abtrennen des Titanoxidhydrates von der Hydrolysemutterlauge (Dünnsäure), Kalzinieren des Titanoxidhydrates unter Bildung von Titandioxid, dadurch gekennzeichnet, daß die Reduktion mit einer gemäß den Ansprüchen 1 bis 3 hergestellten $Ti^{3+}$-haltigen Lösung durchgeführt wird.

**Claims**

**1.** Process for the production of a solution containing $Ti^{3+}$, characterised in that an undigested residue from the digestion of raw materials containing titanium with sulphuric acid using the sulphate process or mixtures thereof with other raw materials containing titanium is digested with sulphuric acids using the sulphate process at an initial sulphuric acid concentration of > 80 wt.% $H_2SO_4$ and a temperature of > 150°C and the resultant digestion cake is dissolved with water and/or sulphuric acid, wherein metallic iron is added before or during digestion in such a quantity that, once the digestion cake has been dissolved, the digestion solution contains at least 5 wt.% to 100 wt.% of $Ti^{3+}$, relative to the total titanium content in the digestion solution.

**2.** Process according to claim 1, characterised in that the metallic iron used is iron scrap, steel scrap, cast iron scrap and/or another scrap material containing metallic iron having a content of > 1 wt.% iron, relative to total weight.

**3.** Process according to claim 1, characterised in that the molar quantity of the added metallic iron amounts to 0.25 to 5 times the molar quantities of titanium and iron introduced into the digestion by the raw materials, with the exception of the quantity of added metallic iron.

**4.** Use of the solution containing $Ti^{3+}$ produced according to claims 1 to 3 in the production of titanium dioxide using the sulphate process for reducing $Fe^{3+}$ in the digestion solution.

**5.** Process for the production of titanium dioxide using the sulphate process by digestion of raw materials containing titanium with sulphuric acid to form a digestion cake, dissolution of the digestion cake with water and/or sulphuric acid to form a so-called digestion solution (black solution), separation of insoluble constituents (residue) from the digestion solution, reduction of $Fe^{3+}$ in the digestion solution, hydrolysis to form titanium oxide hydrate, separation of the titanium oxide hydrate from the hydrolysis mother liquor (thin acid), calcination of the titanium oxide hydrate to form titanium dioxide, characterised in that reduction is performed with a solution containing $Ti^{3+}$ produced according to claims 1 to 3.

**Revendications**

**1.** Procédé de préparation d'une solution contenant du $Ti^{+3}$, caractérisé en ce qu'un résidu non attaqué de l'attaque de matières premières titanifères par l'acide sulfurique selon le procédé au sulfate ou des mélanges d'un tel résidu avec d'autres matières premières titanifères sont attaqués par l'acide sulfurique selon le procédé au sulfate à une concentration initiale en acide sulfurique supérieure à 80 % en poids de $H_2SO_4$ et une température supérieure à 150°C, le gâteau d'attaque ainsi obtenu est dissous par l'eau et/ou l'acide sulfurique avec, avant ou durant l'attaque, une adjonction de fer métallique en quantité telle qu'après dissolution du gâteau d'attaque, il y ait au moins 5 % en poids et jusqu'à 100 % en poids de $Ti^{+3}$ dans la solution d'attaque, par rapport au titane total de cette solution.

**2.** Procédé selon la revendication 1, caractérisé en ce que l'on utilise le fer métallique sous la forme de grenaille de fer, de grenaille d'acier, de grenaille de fonte et/ou d'une autre matière en grenaille contenant du fer métallique à une teneur en fer supérieure à 1 % du poids total.

3. Procédé selon la revendication 1, caractérisé en ce que la quantité molaire de fer métallique ajoutée représente de 0,25 à 5 fois les quantités molaires de titane et de fer introduites à l'attaque par les matières premières à l'exception de la quantité de fer métallique ajoutée.

4. Utilisation de la solution contenant du $Ti^{+3}$ préparée selon les revendications 1 à 3 à la fabrication du dioxyde de titane par le procédé au sulfate, pour la réduction du $Fe^{+3}$ contenu dans la solution d'attaque.

5. Procédé pour la fabrication du dioxyde de titane par le procédé au sulfate, par attaque de matières premières titanifères par l'acide sulfurique avec formation d'un gâteau d'attaque, dissolution de ce dernier par l'eau et/ou l'acide sulfurique avec formation de la solution d'attaque ("solution noire"), séparation des constituants insolubles (résidu) de la solution d'attaque, réduction du $Fe^{+3}$ contenu dans la solution d'attaque, hydrolyse avec formation d'oxyde hydraté de titane, séparation de ce dernier d'avec les liqueurs mères d'hydrolyse (acide dilué), calcination de l'oxyde hydraté de titane avec formation de dioxyde de titane, caractérisé en ce que la réduction est réalisée à l'aide d'une solution contenant du $Ti^{+3}$ préparée selon les revendications 1 à 3.